**Europäisches Patentamt**

**European Patent Office**

**Office européen des brevets**

(19)

(11) Numéro de publication: **0 120 735**
**A1**

(12) **DEMANDE DE BREVET EUROPEEN**

(21) Numéro de dépôt: **84400349.1**

(22) Date de dépôt: **21.02.84**

(51) Int. Cl.³: **B 21 D 39/04**
**B 21 K 25/00, F 16 C 7/00**

(30) Priorité: **25.02.83 FR 8303375**

(43) Date de publication de la demande:
**03.10.84 Bulletin 84/40**

(84) Etats contractants désignés:
**AT BE CH DE GB IT LI NL SE**

(71) Demandeur: **SKF COMPAGNIE D'APPLICATIONS MECANIQUES & CIE. S.N.C.**
**Route de Roybon**
**F-26240 Saint-Vallier-s/Rhône(FR)**

(72) Inventeur: **Chobert, Didier**
**9, rue du Général Chapelle**
**F-07300 Tournon(FR)**

(74) Mandataire: **Boivin, Claude**
**9, rue Edouard-Charton**
**F-78000 Versailles(FR)**

(54) Procédé de fabrication de bielles à extrémités rétreintes et bielles obtenues par ce procédé.

(57) Procédé de fabrication de bielles tubulaires à extrèmités rétreintes. Selon ce procédé on assemble une pièce d'extrémité (2a) ou (2b) à l'une des extrémités du tube (1) constituant le corps de la bielle et on rétreint ensuite ensemble ladite extrémité du tube et la pièce à laquelle elle est assemblée.

L'invention a également pour objet les bielles obtenues par ce procédé.

FIG. 1

EP 0 120 735 A1

- 1 -

Procédé de fabrication de bielles à extrémités rétreintes et bielles obtenues par ce procédé.

Les bielles tubulaires à extrémités rétreintes ont de nombreuses applications tant en mécanique qu'en aéronautique; elles peuvent être utilisées, par exemple, comme bielles de commande de vol, comme tirants de support de plancher ou d'attache d'aile.

L'extrémité rétreinte ayant un diamètre plus faible que le tube, on est obligé de lui donner une épaisseur nettement supérieure à celle nécessaire pour le tube, lorsque la bielle doit résister à des efforts élevés. A cet effet, jusqu'à présent, on utilise des tubes épais qu'on amincit, sauf à ses extrémités, par exemple par tournage ou mandrinage. Ce procédé est très coûteux, à cause d'une part de la qualité de matière qu'il nécessite et d'autre part de l'usinage.

La présente invention a pour objet un procédé de fabrication de bielles tubulaires à extrémités rétreintes qui permet de partir directement d'un tube ayant l'épaisseur nécessaire.

Ce procédé est caractérisé en ce qu'on assemble une pièce d'extrémité à l'une des extrémités du tube constituant le corps de la bielle et en ce qu'on rétreint ensuite ensemble ladite extrémité du tube et la pièce à laquelle elle est assemblée.

Les épaisseurs du tube et de la pièce d'extrémité étant indépendantes, on peut donner à chacun de ces éléments l'épaisseur qui leur est nécessaire.

La pièce d'extrémité peut être assemblée de manière quelconque au tube. Dans le cas où elle est assemblée par vissage et que la bielle travaille en fatigue, il y a avantage à prévoir une surépaisseur à l'extrémité du tube et à former dans cette surépaisseur le filetage ou le taraudage du tube.

On a décrit ci-après, à titre d'exemples non limitatifs, divers modes de réalisation de la bielle selon l'invention avec référence au dessin annexé dans lequel :

La Figure 1 est une vue en coupe longitudinale du tube constituant le corps de la bielle;

Les Figures 2a et 2b montrent deux formes de réalisation de la pièce d'extrémité;

Les Figures 3a et 3b montrent le tube respectivement assemblé à la pièce d'extrémité de la Figure 2a et à celle de la Figure 2b;

Les Figures 4a et 4b sont des vues semblables aux Figures 3a et 3b après rétreint;

Les Figures 5a et 5b montrent deux autres formes pour l'extrémité du tube;

La Figure 6 montre après rétreint la bielle réalisée à partir du tube de la Figure 5b.

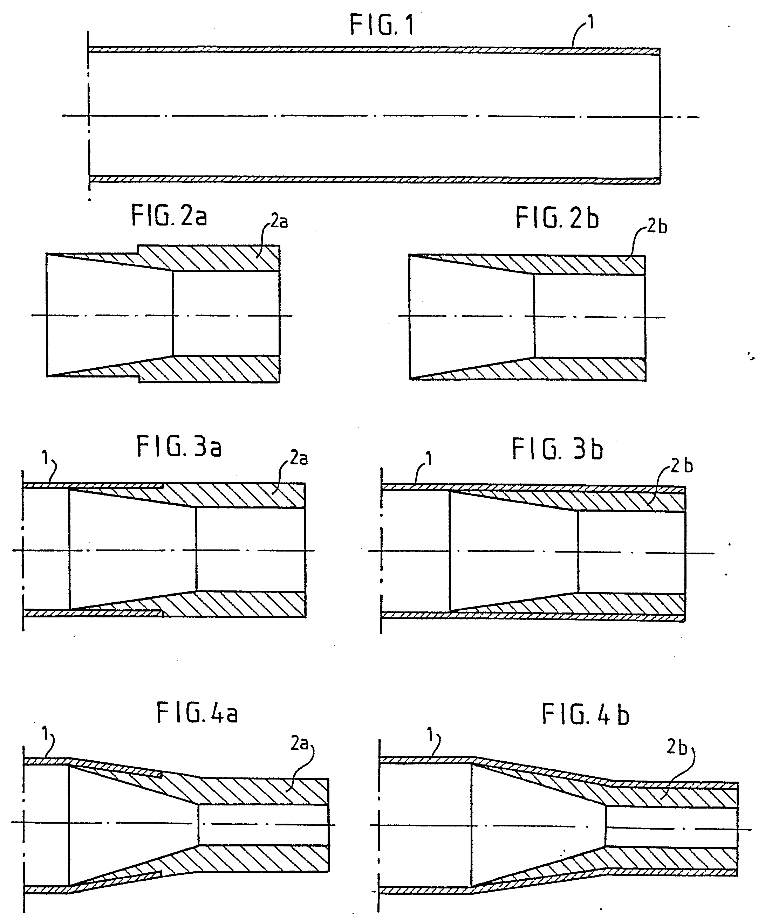

Pour réaliser une bielle selon l'invention, on découpe à longueur voulue le tube 1 qui constituera le corps de la bielle et on usine une pièce d'extrémité qui peut, par exemple, comporter un décrochement extérieur à sa périphérie comme la pièce 2a à la Figure 2a ou bien être extérieurement cylindrique comme la pièce 2b de la Figure 2b.

Puis on assemble le tube 1 sur la pièce d'extrémité par exemple par vissage, soudage ou dudgeonnage (Figure 3a ou 3b).

Enfin, on rétreint, par exemple par martelage, l'extrémité du tube et la pièce sur lequel elle est montée (Figure 4a ou 4b).

Dans le cas d'une bielle travaillant en fatigue et lorsque la pièce d'extrémité est assemblée au tube par vissage, le départ du filetage se trouve dans une zone dont l'épaisseur est fortement diminuée. De ce fait, cette zone risque de devenir une zone de concentration d'effort dans laquelle une rupture peut se produire.

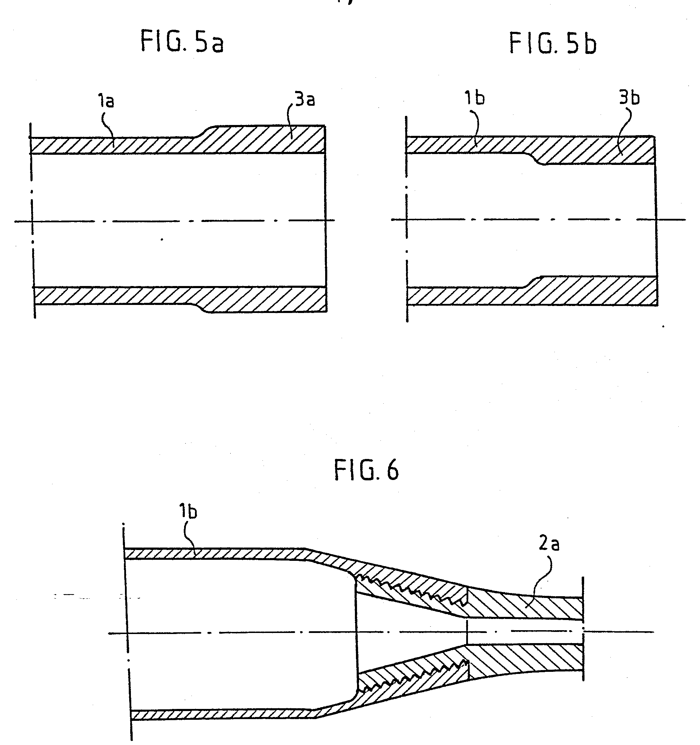

Pour éviter ce défaut, on peut renforcer le tube à son extrémité, par usinage ou par déformation, de façon qu'il présente une surépaisseur extérieure 3a, comme le tube 1a de la Figure 5a, ou une surépaisseur intérieure 3b (tube 1b de la Figure 5b), et former
le filetage dans cette surépaisseur. La Figure 6 montre l'ensemble après rétreint. On notera à ce sujet que la surépaisseur
nécessaire a une valeur réduite de l'ordre de 2mm; sa réalisation
est aisée et ne nécessite qu'une seule passe, alors qu'il faudrait
procéder à au moins sept ou huit passes si l'on désirait former
l'extrémité rétreinte directement à partir du tube.

Revendications.

1. - Procédé de fabrication de bielles tubulaires à extrémités rétreintes caractérisé en ce qu'on assemble une pièce d'extrémité 2a ou 2b à l'une des extrémités du tube 1 constituant le corps de la bielle et en ce qu'on rétreint ensuite ensemble ladite extrémité du tube et la pièce à laquelle elle est assemblée.

2. - Procédé selon la revendication 1, dans lequel on assemble la pièce d'extrémité au tube par vissage, caractérisé en ce qu'on prévoit une surépaisseur 3a ou 3b à l'extrémité du tube et en ce qu'on forme dans cette surépaisseur le filetage ou le taraudage du tube.

3. - Bielle à extrémité rétreinte caractérisée en ce qu'lle est ontenur par le procédé selon la revendication 1 ou 2.

FIG. 1

FIG. 2a

FIG. 2b

FIG. 3a

FIG. 3b

FIG. 4a

FIG. 4b

## FIG. 5a

1a    3a

## FIG. 5b

1b    3b

## FIG. 6

1b    2a

**Office européen des brevets**

## RAPPORT DE RECHERCHE EUROPEENNE

EP 84 40 0349

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | US-A-2 441 580 (MAGEOCH) <br> * Colonne 1, lignes 24-30; colonne 3, lignes 7-10; colonne 4, lignes 22-47; figures 10,11 * | 1 | B 21 D 39/04 <br> B 21 K 25/00 <br> F 16 C 7/00 |
| | --- | | |
| A | FR-A-2 046 876 (SHUR-LOK) <br> * Revendications 8-10; figures 2,4,6 * | 1,3 | |
| | --- | | |
| A | US-A-2 761 205 (SIKLOSI) <br> * Colonne 1, lignes 48-50; colonne 2, lignes 6-10; figure 1 * | 2 | |
| | --- | | |
| A | US-A-2 022 801 (CONNER) <br> * Page 1, colonne de gauche, lignes 1-8; page 2, colonne de droite, lignes 20-35; figures 17,18 * | 1,3 | DOMAINES TECHNIQUES RECHERCHES (Int. Cl. 3) |
| | --- | | |
| A | FR-A-1 452 811 (S.A. RECHERCHES DE MECANIQUE APPLIQUEE) <br> * Page 2, colonne de droite, lignes 55-61; page 3, colonne de gauche, lignes 1-13; résumé, points 1,2D,2F,2G; figure 7 * | 3 | B 21 D <br> B 21 K <br> F 16 C |
| | --- | | |
| A | DE-A-2 364 464 (DAIMLER-BENZ) <br> * Revendication 1; figure 2 * | 1 | |
| | ---           -/- | | |

Le présent rapport de recherche a été établi pour toutes les revendications

| Lieu de la recherche | Date d'achèvement de la recherche | Examinateur |
|---|---|---|
| LA HAYE | 30-05-1984 | OFFMANN P.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

**0120735**

Numéro de la demande

Office européen
des brevets

**RAPPORT DE RECHERCHE EUROPEENNE**

EP 84 40 0349

## DOCUMENTS CONSIDERES COMME PERTINENTS — Page 2

| Catégorie | Citation du document avec indication, en cas de besoin, des parties pertinentes | Revendication concernee | CLASSEMENT DE LA DEMANDE (Int. Cl. ³) |
|---|---|---|---|
| A | GB-A-1 220 874 (CLARK)<br>* Page 2, lignes 53-57, 64-65, 77-95; figures 1-3 * | 1 | |
| A | GB-A-1 233 054 (LASFARGUES)<br>* Revendications 1,2,3,5; figures 5,6 * | 2,3 | |

DOMAINES TECHNIQUES
RECHERCHES (Int. Cl. ³)

Le présent rapport de recherche a été établi pour toutes les revendications

| Lieu de la recherche<br>LA HAYE | Date d'achèvement de la recherche<br>30-05-1984 | Examinateur<br>OFFMANN P.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82